(19) Europäisches Patentamt

European Patent Office

Office européen des brevets

(11) **EP 1 736 735 A1**

(12) **EUROPEAN PATENT APPLICATION**

(43) Date of publication:
**27.12.2006 Bulletin 2006/52**

(51) Int Cl.:
*G01C 21/34* (2006.01)   *G08G 1/01* (2006.01)

(21) Application number: **06012649.7**

(22) Date of filing: **20.06.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **21.06.2005 JP 2005180975**

(71) Applicant: **AISIN AW CO., LTD.
Anjo-shi, Aichi 444-1192 (JP)**

(72) Inventor: **Ishikawa, Hiroki, c/o Aisin AW Co., Ltd.
Okazuki-shi, Aichi 444-8564 (JP)**

(74) Representative: **Kramer - Barske - Schmidtchen
European Patent Attorneys
Patenta
Radeckestrasse 43
81245 München (DE)**

(54) **Travel time database generating device and method**

(57)   Travel time database generating systems, methods, and programs receive a vehicle's present location information and calculate a link travel time for each link included in the present location information. The systems, methods, and programs generate a travel time database including link travel times by estimating a travel route between the vehicle's present locations detected every predetermined time period and calculating a link travel time of links included in the estimated travel route.

FIG. 1

EP 1 736 735 A1

**Description**

The disclosure of Japanese Patent Application No. 2005-180975 filed on June 21, 2005 including the specification, drawings, and abstract is incorporated herein by reference in its entirety.

Related technical fields include travel time database generating devices, methods, and programs.

Conventional navigation devices search for an optimum route from a set departure point to a set destination based on road map information and display the route on a display unit. During the search, the optimum route may be determined such that it has a shortest distance and/or shortest required time from a departure point to a destination.

In order that the optimum route may be set in view of an actual volume of traffic and/or a congestion state, some conventional navigation devices consider traffic information. For example, every time a vehicle passes through a predetermined road section, the vehicle may send to a traffic information center information the amount of time required to pass through the predetermined road section. Based on this information, the traffic information center may estimate a state of traffic on the road section by statistically processing the received information from a plurality of vehicles. A searchable traffic database may be created including the estimated sate of traffic on various roads. See, for example, Japanese Unexamined Patent Application Publication No. 2004-20288.

According to the above conventional systems, the information on the time required to pass through the predetermined road section(s) is sent every time a participating vehicle passes through a predetermined road section. Thus, the number of transmissions from the vehicles may be large and duplicative. Also, for each transmission, because a variety of information may be sent, the transmission cost may be large. It might reduce the number of transmissions per vehicle, for example, to send the information for that vehicle together at predetermined times. However, in such a case, because the volume of information for such a transmission is larger, the time for every transmission may be longer and the transmission cost may not be substantially reduced. Furthermore, a required time for processing may be increased.

At least, in view of one or more the above-described deficiencies in conventional systems, a travel time database generating device, method, and program that may reduce transmission volumes and/or processing times may be provided.

Various exemplary implementations of the principles described herein provide travel time database generating systems, methods, and programs that may receive a vehicle's present location information and may calculate a link travel time for each link included in the present location information. The systems, methods, and programs may generate a travel time database including link travel times by estimating a travel route between the vehicle's present locations detected every predetermined time period and calculating a link travel time of links included in the estimated travel route.

Exemplary implementations will now be described with reference to the accompanying drawings, wherein:

Fig. 1 is an exemplary diagram illustrating displacement of a vehicle's present location;

Fig. 2 is an exemplary diagram illustrating links included in a vehicle's travel route;

Fig. 3 is an exemplary diagram illustrating displacement of a vehicle's present location;

Fig. 4 is an exemplary diagram illustrating links included in a vehicle's travel route;

Fig. 5 illustrates an exemplary travel time database generating method;

According to various exemplary implementations of the principles described herein, a travel time database generating device may physically, functionally, or conceptually include a present location database that may store information on the present location of a plurality of vehicles obtained during a predetermined period and a server. The controller may process the vehicle's present location information stored in the present location database, may calculate a link travel time as information for each link, may statistically process the calculated link travel time of each link; and may generate a travel time database that stores the link travel time after the statistical processing.

The present location database may be information on the present location of vehicles sent every predetermined time period to for example, a center, such as an information center. The information may include stored present location information that an on-vehicle device mounted in a vehicle, such as, an automobile, a truck, a bus and/or a motorcycle accumulated during the predetermined period. The predetermined time period may be preset and may be set arbitrarily.

In such a case, the vehicle may be pre-registered by the center and may have a registration ID. The on-vehicle device may also or alternatively be pre-registered. The information center may physically, functionally, and/or conceptually include a communicator that may receive the present location information from the on-vehicle device and a memory. The memory may store the present location information received from the on-vehicle device and may include, for example, a semiconductor memory, a magnetic disk, and/or an optical disk.

The on-vehicle device may be, for example, a vehicle navigation device with a wireless communication function or any other device that is provided with, for example, a present location detector and a transmitter. The present location detector may detect a present location using for example, a GPS (Global Positioning System), a geomagnetic sensor, a distance sensor, a steering sensor, a beacon sensor, and/or a gyro sensor. The transmitter may send to the information center every predetermined time period the present location information. The present location information may include vehicle identification information and/or a coordinate value that indicates a present location detected by the present location detector.

For example, the vehicle may be a taxi that belongs to a taxi company, and the information center may be a traffic control center in the taxi company. Each of the on-vehicle devices of a plurality of taxis of the taxi company may send the present location information every predetermined time period to the traffic control center. A traffic control server in the traffic control center may store each of the received taxis' present location information in a memory. Thus, the traffic control center may determine each of the taxis' traffic situations. Each of the stored taxis' present location information, for example, may be used in the present location database.

**[0018]** As another example, the vehicle may be a truck that belongs to a transportation company, and the information center may be a traffic control center in the transportation company. Each of the on-vehicle devices of a plurality of trucks of the transportation company may send present location information every predetermined time period to the traffic control center. A traffic control server in the traffic control center may store each of the received trucks' present location information in a memory. Thus, the traffic control center may determine each of the trucks' traffic situations and, as a result, update/determine a delivery status of each truckload. Each of the stored trucks' present location information in the memory may be used in the present location database.

As another example, the vehicle may be a bus that belongs to a bus company, and the information center may be a traffic control center in the bus company. Each of the on-vehicle devices of a plurality of buses of the bus company may send present location information every predetermined time period to the traffic control center. A traffic control server in the traffic control center may store each of the received buses' present location information in a memory. Thus, the traffic control center may determine each of the route buses' traffic situation. Using each of the received buses' present location information and/or traffic situation as bus location system information, the traffic control center may, for example, display a coming bus's location on a display at a bus stop. Each of the stored buses' present location information in the memory may be used in the present location database.

The server, such as the server in the information center may physically, functionally, and/or conceptually include a memory and a controller. The memory may be a storage medium that stores map information including, for example, road information and/or search information. The controller may estimate a travel route between points through which a vehicle passes based on a displacement of the vehicle's present location, may calculate a link travel time of links included in the estimated travel route, and may statistically process the calculated link travel time of each link.

As used herein, the term "link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes. As used herein the term "node" refers to a point connecting two links. A node may be, for example, an intersection, an intersection having more than three roads, a curve, and/or a point at which the road type changes.

The road information may include information on, for example, road intersections (including a fork and/or a T-junction), nodes, and links. Link data may include, for example, an identification number for link, a link ID, coordinates of starting and ending link points, and/or a distance from starting link point to ending link point.

The server may calculate a congestion degree and/or a driving speed as link information on each link based on the link travel time of each link. In other words, the link information for each link stored in the travel time database may include, for example, a congestion degree and/or a driving speed as well as the link travel time. Furthermore, the travel time database may include change factors of the link information as well as the link information.

The change factors may be, for example, a time factor, a calendar factor, a climate factor, and/or an incidental factor. For example, the time factor may be a short time period (for example, about 15 minutes), a long time period (for example, about 1 hour), or other time periods with wider divisions (such as, for example, morning, afternoon, evening, night and/or midnight). Even if traveling the same link, its link travel time, congestion degree and/or driving speed may depend on the time period.

Calendar factors may include, for example, a day of the week, a date and/or a season. Even if traveling the same link, its link travel time, congestion degree and/or driving speed may depend on a day of the week (for example, weekday or weekend days, the fifth, tenth, fifteenth, twentieth, twenty fifth, thirtieth days of a month, days in a successive holiday period, days after a successive holiday period, Bon holiday; New Year's holiday, and/or days in a summer vacation).

Incidental factors may include, for example, accidents, a traffic restriction and/or an event such as a festival and/or a sports competition. Thus, even if traveling the same link, its link travel time, congestion degree and/or driving speed may depend on one or more incidental factors.

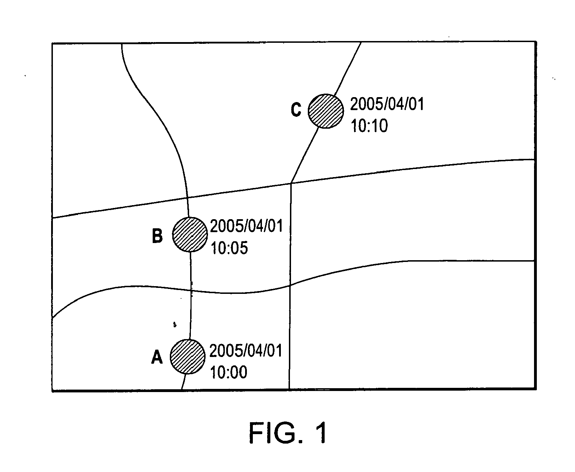

Hereinafter, an exemplary database generating methods will be described with reference to Figs. 1-5. For ease of explanation as operation wherein a link travel time is calculated based on present location information e will be described. The exemplary methods may be implemented, for example, by one or more components of the above-described travel time database generating device. However, even though the exemplary structure of the above-described a travel time database generating device may be referenced in the description, it should be appreciated that the structure is exemplary and the exemplary method need not be limited by any of the above-described exemplary structure.

Fig. 1 is a first exemplary diagram illustrating displacement of a vehicle's present location. As shown in Fig. 1, vehicle $\alpha$ is represented traveling on a road on a map. An on-vehicle device of the vehicle $\alpha$ may send present location information, for example, about every 5 minutes (predetermined time period), and pass through point A, point B and point C consecutively. The point A, point B, and point C may be points at which the present location of the vehicle is detected. In Fig. 1, a date and a time shown at each point indicate when points were detected as the vehicle's present location.

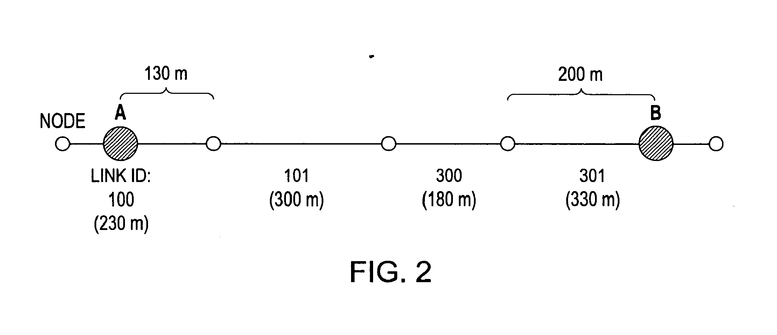

The controller of the server may, for example, estimate a travel route between 2 detected present locations of a particular vehicle, e.g., a travel route between point A and point B of the vehicle $\alpha$. In such a case, the controller may access map information stored in a memory; perform a route search, estimate the travel route, and identify the links that the vehicle $\alpha$ traveled on between point A and point B. In this way, as shown in Fig. 2., nodes and links may be identified. In Fig. 2, small circles may represent nodes and big circles may represent point A and point B. Lines between each node may represent links, three digit numbers under each link may represent link ID, and numbers in parenthesis under each link ID may represent a distance from a starting point to an ending point of link, i.e., a link length (for example, in meters). Numbers above links including point A and point B may represent distance (for example, in meters) from a node to point A or point B.

The controller may divide the travel time from point A to point B. The travel time may be divided, for example, in proportion to the link length of each link. In the example of Fig. 2, the distance in meters from point A to point B may be calculated by the following formula (1):

$$130 \text{ m} + 300 \text{ m} + 180 \text{ m} + 200 \text{ m} = 810 \text{ m} \qquad (1)$$

The travel time from point A to point B is the same as the predetermined time period, that is, 5 minutes in this example. Accordingly, the average travel speed from point A to point B is calculated by the following formula (2):

$$810 \text{ m} \div 5 \text{ min} \times 60 \text{ min/hr} \div 1000 \text{ m/km} = 9.72 \text{ km/h} \qquad (2)$$

Based on the above calculations, when the travel time from point A to point B is divided in proportion to the link length of each link, for example, the link travel time for the link having ID 101 is 111.1 seconds and the link travel time for the link having ID 300 is 66.7 seconds. In this way, the travel times link ID 101 and link ID 300 are calculated at point A, for example at the time: 10:00 am.

For link ID 100 and link ID 301, the travel times may not be calculated because, for example, their whole link lengths are not included in a distance range from point A to point B.

Next, the server may estimate a travel route from point A to point B and, in the same way as described above, calculate a travel time of links whose whole lengths are included in a distance range from point B to point C. Continuously, the same operation may be performed repeatedly for each distance range between points crossed every predetermined time period.

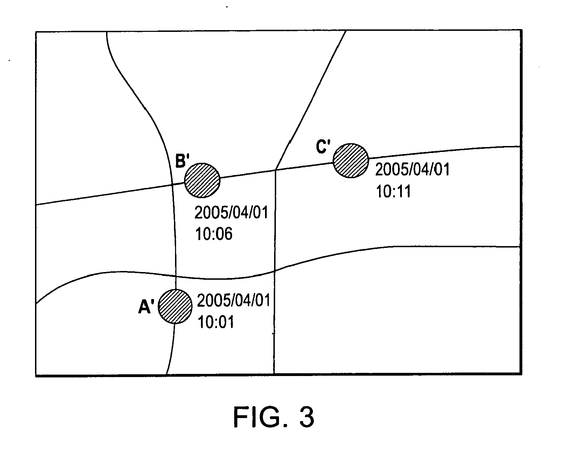

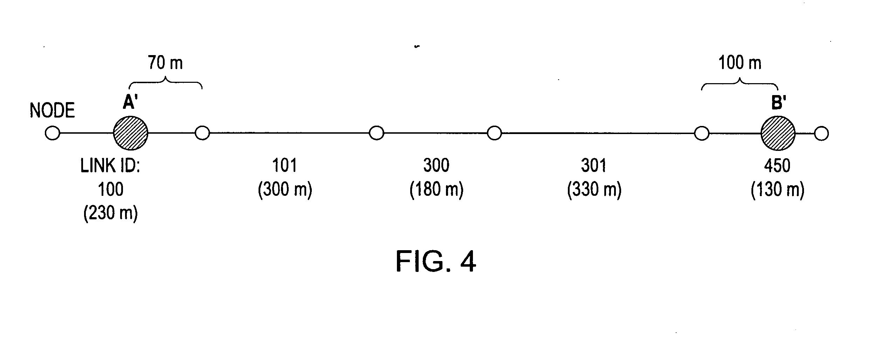

Next, the controller of the server may additionally or alternatively execute a statistical processing of the link travel times of the identical link in the identical time period. Fig. 3 is an exemplary diagram illustrating displacement of a vehicle's present location and Fig. 4 is an exemplary diagram illustrating links included in a travel route

Based on present location information in the identical time period to the one in the exemplary implementation shown in the Fig. 1, and furthermore the present location information sent by a different vehicle $\beta$ from the vehicle $\alpha$, the link travel time may be similarly calculated. The time period may be accordingly set, for example, as 5 minutes period, 30 minutes period, or 1 hour period. The server may generate a travel time database by executing a statistical processing of the calculated link travel time by processing the present location information in the identical time period. In this example, the time period is set as 15 minutes. For example, 10:00 am -11:00 am may be divided into 4 time periods: 10:00 am -10:15 am, 10:15 am -10:30 am, 10:30 am -10:45 am and 10:45 am -11:00 am. Accordingly, the present location information for vehicle $\beta$ during 10:00 am -10:15 am is included in the identical time period as that for vehicle $\alpha$, described above.

As shown in Fig. 3, vehicle $\beta$ is represented traveling on a road on a map. An on-vehicle device of the vehicle $\beta$ may send present location information every predetermined time period, for example, every 5 minutes, and pass through point A', point B' and point C' consecutively. The point A', point B', and point C' may be points at which the present location of the vehicle is detected. In Fig. 3, a date and a time shown at each point indicate when points were detected as the vehicle's present location. Considering the date and time, it may be noted that the present location information in the example shown in Fig. 3 is present location information included in the identical time period (10:00 am - 10: 15 am) to that of the example shown in Fig. 1.

The server may estimate a travel route between point A' and point B', similarly to the exemplary implementation shown in Fig. 1. As shown in Fig. 4, nodes and links may be identified. Fig. 4 is the type of diagram as Fig. 2, only shown with respect to vehicle β. As discussed above, the controller may divide the travel time in proportion to the link length of each link. As a result the, the distance from point A' to point B' may be calculated, the distance from point A' to point B' may be divided by the travel time from point A' to point B' (e.g., 5 min). Accordingly, the average travel speed from point A' to point B' may be calculated. Based on the above, when the travel time from point A' to point B' is divided in proportion to the link length of each link, the travel time for link ID 101 is 91.8 seconds, the travel time for link ID 300 is 55.1 seconds, and the travel time for link ID 301 is 101.0 seconds. In such a way, link ID 101, link ID 300 and link ID 301 travel times may be calculated at point A, at the time: 10:01 am.

Regarding the link travel time in the example shown in Fig. 1 and the link travel time in the example shown in Fig. 3, because their time period as a factor is identical, they may be statistically processed. For example, an average value of the link travel times may be calculated by the statistical processing, wherein the average travel time for link ID 101 is 101.5 seconds, the average travel time for link ID 300 is 60.9 seconds, and the average travel time for link ID 301 is 101.0 seconds. It should be noted that because there is only one sample for link ID 301, the average link travel time is based only on that sample, shown in Fig. 3.

As such a result of the statistical processing, it will be noted that link ID 101 and link ID 300, when compared with the example shown in Fig. 1, their link travel times are shorter and the roads corresponding to those links may be considered less busy. Accordingly, by increasing the number of object samples of the statistical processing, detailed and highly accurate information on for example, travel time of each link may be obtained based on the present location information on a traveling vehicle every determined time period.

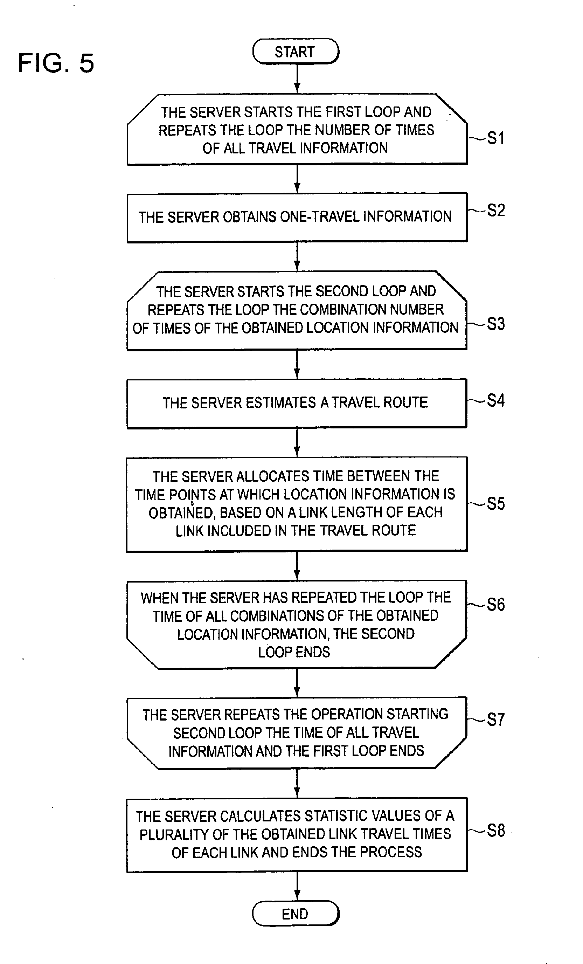

Next, the above travel time database generating method will be summarized with reference to Fig. 5. First, for example, the server may start operations by accessing the present location database. As shown in Fig. 5, the server starts the first loop and repeats the loop the number of times of all travel information (step S1). That is, the server repeats the operations of steps S2-S6, described below, for the present location information of all travel information. In the present location database, the present location information of enough samples to execute the statistical processing is stored. The present location information is obtained present location information obtained during the traveling of a number of participating vehicles (such as for example vehicles α and β).

The server then obtains the one-travel information for one participating vehicle from the present location database (step S2). As used herein "one-travel information" is the present location information that an on-vehicle device mounted in the participating vehicle sends every predetermined time period from a start-up to a stop of an engine of the vehicle, i.e., from a departure to a destination of the vehicle. If the vehicle visits several destinations in a day, a plurality of travel information may be stored as, for example, one-day information. The present location information stored in the present location database may be one-travel information, one-day information; however it may preferably be information during a predetermined time period, for example, as long as several days. Because there is a plurality of participating vehicles sending the present location information, the stored travel information includes a plurality of travel information on each of the plurality of vehicles. For example, if a plurality of travel information on each of a vehicle α, a vehicle β, a vehicle γ,..., and a vehicle ω is stored in the present location database, the first time step S2 is executed in the loop, the first travel information of the vehicle α may be obtained.

Next, the server starts a second loop and repeats the loop the time of combinations for the obtained location information, that is, the present location information in one-travel information obtained from the present location database (step S3). For example, if the obtained present location information in the first travel information of the vehicle α as one-travel information is present location information of point A, point B, point C, point D, ..., point N-1 and point N, the server repeats the operations described below, for each combinations of the present location information, starting with combinations of the present location information on point A and point B, combinations of the present location information on point B and point C, combinations of the present location information on point C and point D,..., and so on up to combinations of the present location information on point N-1 and point N.

Then, the sever may estimate a travel route (step S4). As described in the example shown in Fig. 1, the server may search for a route by accessing the map information stored in the memory, estimate a travel route between point A and point B, and identify links the vehicle α travels on.

The server next allocates time between the time points at which location information is obtained, that is, the travel time between points at which the present location information is obtained, based on a link length of each link included in the travel route (step S5). As described in the example shown in Fig. 1, the server may allocate the travel time between point A and point B based on a link length of each link included in the estimated travel route. Accordingly, the travel time of each link at the time point of point A may be calculated.

When the server has repeated the above-described operations for each combination of the obtained location information of the present location information included in one-travel information obtained from the present location database, the second loop ends (step S6). Next, another one-travel information is obtained, and the second loop starts again. If a plurality of the one-travel information for one vehicle is stored in the present location database, each of the one-travel information for that vehicle may be obtained consecutively and the second loop operation may be performed on each one-travel information. After finishing the second loop operation for all travel information on the current vehicle, one-travel information on a next vehicle is obtained, and the second loop starts again.

The server repeats the operations of obtaining one-travel information and starting second loop for all of the travel information. When the present location information on all travel information has been processed, the first loop ends (step S7). In other words, when for all travel information of all vehicles, the travel times of each link included in the travel route has been calculated, the first loop ends.

Next, the server calculates statistical values of a plurality of the obtained link travel times of each link and ends the process (step S8). For example, as described above, the controller may statistically process a plurality of the obtained travel times of each link and calculate link travel times as statistical values for each link. The statistical processing of the travel times may include any kind of statistical process, for example, calculating an average value of the plurality of the travel times for each link, excluding abnormal values. Accordingly, a travel time database storing link travel times as statistic values may be generated.

The travel time database in a navigation device for vehicles may be available as statistical traffic information when executing navigation process, such as a route search process to a destination. In such a case, a calculated congestion degree and/or a travel speed of each link based on the link travel time of each link may be stored in the travel time database. For example, the travel time database may be installed in a traffic information center to transmit a link travel time, a congestion degree and/or a travel speed of each link to navigation devices for vehicles. The travel time database may provide a link travel time, a congestion degree and/or a travel speed of each link with a server that is installed in a traffic information center and executes navigation processing. The travel time database may be available for a GIS (Geographic Information System) and/or an electronic map as a system that integrates, analyzes a variety of information and/or clearly draws a map based on a location and/or a place by linking letters, numbers and/or images with a map in a computer.

For example, the travel time database generating device may estimate a vehicle's travel route based on the vehicle's present location information sent every predetermined time period, calculate a link travel time of links included in the estimated travel route and thereby generate a travel time database. Accordingly, a mounted on-vehicle device does not need to send to a center the travel time of links on which a vehicle travels. Instead, it only sends the present location data every predetermined time period. Therefore, the number of transmissions and transmission data volume may be reduced, and a travel time database with high accuracy may be generated based on obtained information at a lower transmission cost.

In the above examples, only a case in which a server processes present location information and calculates a link travel time of each link is described. However, a navigation device for vehicles, a server installed in a traffic information center, or a server of a geographic information system and an electronic map providing system may execute online or offline processing of the present location information and calculate the link travel time of each link.

In the above examples, only a case in which a mounted on-vehicle device sends coordinates indicating present locations to an information center is described. However, instead of coordinates, a link ID or a distance from an edge of link may be sent to the information center.

In the above examples, only a case in which a mounted on-vehicle device sends information every predetermined time period to an information center is described. However, instead of every predetermined time period, the information may be sent to the center at predetermined times.

Next, another example will be described. Explanations are omitted of operations and/or effects that are similar to the above described examples.

When a controller allocates a travel time between 2 present locations based on a link length of each link included in a travel route, a hypothetical link length may be calculated from its real link length in accordance with road type. As a result, a travel time may be allocated based on the hypothetical link length of each link.

Herein, the road type may take into consideration, for example, an expressway and/or a general road, and presence or absence of traffic signals and/or railroad crossings.

For example, when a road type of a link is an expressway, a hypothetical link length value may equal its real link length multiplied by 0.5 as a coefficient in accordance with a road type. Thus, if the real link length of the expressway link is 800 m, the hypothetical link length for the expressway link may be 400 m. When the road type of a link is a general double-lane road, a hypothetical link length value may equal its real link length multiplied by 1.0 as a coefficient in accordance with a road type.

When the road type of a link is a general 4 or more-lane road, a hypothetical link length value may equal its real link length multiplied by 0.9 as a coefficient in accordance with a road type. When the road type of link is a general road without centerline, a hypothetical link length value may equal its real link length multiplied by 1.5 as a coefficient in accordance with a road type. Furthermore, in any of the above examples, when there is a traffic signal or a railroad crossing at an edge of a link, 120 may be added to a real link length or previously determined hypothetical link length of the link to obtain the hypothetical link length.

In the above example, the hypothetical link length may be calculated from its real link length in accordance with the road type and the travel time may be allocated based on the hypothetical link length of each link. Thus, a more accurate travel time may be calculated.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A travel time database generating device, comprising a controller that:

   receives a vehicle's present location information including the vehicle's present locations detected every predetermined time period;
   calculates a link travel time for each link; and
   generates a travel time database including link travel times by:

   estimating a travel route between the vehicle's present locations detected every predetermined time period; and
   calculating a link travel time of links included in the estimated travel route.

2. The travel time database generating device of claim 1, wherein the controller statistically processes the calculated link travel time of each link.

3. The travel time database generating device of one of claims 1 or 2, further comprising a memory that stores a present location database that stores information on the present location of a plurality of vehicles obtained during the predetermined time period.

4. The travel time database generating device of one of claims 1 to 3, wherein the controller:

   estimates the travel route between two consecutively detected present locations of the vehicle by accessing map information and performing a route search; and
   identifies links which the vehicle traveled on.

5. The travel time database generating device of one of claims 1 to 4, wherein the controller calculates a link travel time of each link by allocating the travel time between consecutively detected present locations based on a link length of each link included in the travel route.

6. The travel time database generating device of one of claims 2 to 5, wherein the controller statistically processes link travel times for identical links in identical time periods.

7. The travel time database generating device of claim 5, wherein the link length of each link is an actual link length.

8. The travel time database generating device of claim 5, wherein the link length of each link is a value that equals an actual link length multiplied by a coefficient, the coefficient for each link based on a respective road type of each link.

9. An information server, comprising the travel time database generating device of claim 1.

10. A travel time database generating method, comprising:

receiving a vehicle's present location information including the vehicle's present locations detected every predetermined time period;
calculating a link travel time for each link; and
generating a travel time database including link travel times by:

estimating a travel route between the vehicle's present locations detected every predetermined time period; and
calculating a link travel time of links included in the estimated travel route.

FIG. 1

FIG. 2

FIG. 3

70 m

100 m

NODE

A'

B'

LINK ID:
100
(230 m)

101
(300 m)

300
(180 m)

301
(330 m)

450
(130 m)

FIG. 4

EP 1 736 735 A1

FIG. 5

START

THE SERVER STARTS THE FIRST LOOP AND REPEATS THE LOOP THE NUMBER OF TIMES OF ALL TRAVEL INFORMATION ~S1

THE SERVER OBTAINS ONE-TRAVEL INFORMATION ~S2

THE SERVER STARTS THE SECOND LOOP AND REPEATS THE LOOP THE COMBINATION NUMBER OF TIMES OF THE OBTAINED LOCATION INFORMATION ~S3

THE SERVER ESTIMATES A TRAVEL ROUTE ~S4

THE SERVER ALLOCATES TIME BETWEEN THE TIME POINTS AT WHICH LOCATION INFORMATION IS OBTAINED, BASED ON A LINK LENGTH OF EACH LINK INCLUDED IN THE TRAVEL ROUTE ~S5

WHEN THE SERVER HAS REPEATED THE LOOP THE TIME OF ALL COMBINATIONS OF THE OBTAINED LOCATION INFORMATION, THE SECOND LOOP ENDS ~S6

THE SERVER REPEATS THE OPERATION STARTING SECOND LOOP THE TIME OF ALL TRAVEL INFORMATION AND THE FIRST LOOP ENDS ~S7

THE SERVER CALCULATES STATISTIC VALUES OF A PLURALITY OF THE OBTAINED LINK TRAVEL TIMES OF EACH LINK AND ENDS THE PROCESS ~S8

END

**EP 1 736 735 A1**

European Patent
Office

**EUROPEAN SEARCH REPORT**

Application Number

EP 06 01 2649

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 933 100 A (GOLDING ET AL) 3 August 1999 (1999-08-03) * column 3, line 54 - column 4, line 18 * * abstract; claims 1,15; figure 2 * ----- | 1-10 | INV. G01C21/34 G08G1/01 |
| A | US 2001/029425 A1 (MYR DAVID) 11 October 2001 (2001-10-11) * paragraph [0125] - paragraph [0134] * * paragraph [0141] - paragraph [0160] * * abstract * ----- | 1-10 | |
| A | US 2005/107945 A1 (HILLER ANDREAS ET AL) 19 May 2005 (2005-05-19) * abstract; figures 1,2 * ----- | 1-10 | |
| | | | TECHNICAL FIELDS SEARCHED (IPC) |
| | | | G01C G08G |

The present search report has been drawn up for all claims

| Place of search | Date of completion of the search | Examiner |
|---|---|---|
| The Hague | 13 September 2006 | Passier, Martinus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

**ANNEX TO THE EUROPEAN SEARCH REPORT
ON EUROPEAN PATENT APPLICATION NO.** EP 06 01 2649

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2006

| Patent document cited in search report | | Publication date | Patent family member(s) | | Publication date |
|---|---|---|---|---|---|
| US 5933100 | A | 03-08-1999 | NONE | | |
| US 2001029425 | A1 | 11-10-2001 | US | 6480783 B1 | 12-11-2002 |
| US 2005107945 | A1 | 19-05-2005 | AT | 304160 T | 15-09-2005 |
| | | | AU | 2002342908 A1 | 30-07-2003 |
| | | | DE | 10201106 A1 | 14-08-2003 |
| | | | DE | 50204206 D1 | 13-10-2005 |
| | | | WO | 03060429 A1 | 24-07-2003 |
| | | | EP | 1466140 A1 | 13-10-2004 |
| | | | ES | 2248621 T3 | 16-03-2006 |
| | | | JP | 2005515528 T | 26-05-2005 |
| | | | PT | 1466140 T | 31-10-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005180975 A

- JP 2004020288 A